# EUROPÄISCHE PATENTSCHRIFT

(11) **EP 0 583 593 B1**
(45) Veröffentlichungstag und Bekanntmachung des Hinweises auf die Patenterteilung: **05.02.1997**
(21) Anmeldenummer: 93110809.6
(22) Anmeldetag: 06.07.1993
(51) Int. Cl.: A22C 17/12

(54) **Verfahren und Vorrichtung zum Enthäuten und Abschwarten eines Behandlungsgutes**
Method and device for removing rind or skin from products
Procédé et dispositif à découenner ou éplucher des produits

(30) Priorität: 06.07.1992 DE 4221796; 07.10.1992 DE 4233723
(43) Veröffentlichungstag der Anmeldung: 23.02.1994
(73) Patentinhaber: Maja-Maschinenfabrik Hermann Schill GmbH, D-77694 Kehl (DE)
(72) Erfinder: Schill, Alfred, D-77694 Kehl (DE); Long, John c/o Maja Maschinenfabrik, D-77694 Kehl (DE); Thiede, Dave c/o Maja Maschinenfabrik, D-77694 Kehl (DE)
(74) Vertreter: Schuster, Gregor, Dipl.-Ing.

(56) Entgegenhaltungen:
- EP-A- 0 203 447
- DE-A- 2 420 188
- DE-A- 3 020 351
- FR-A- 2 642 274
- FR-A- 2 651 963
- GB-A- 2 150 417
- US-A- 2 455 831
- US-A- 2 590 747

## Beschreibung

Die Erfindung betrifft ein Verfahren und eine Vorrichtung zum Enthäuten und Abschwarten von einem Behandlungsgut, insbesondere von Fleisch-, Fischstücken oder dgl..

Aus der bekannten DE-PS 30 20 351 geht eine Entschwartungsmaschine hervor, bei der eine als Andrückorgan dienende Andruckwalze an einem Walzenträger gelagert ist, der ein Paar Doppelschwingen aufweist. Die Schwingen sind aus den Längsseiten einer die Zuführeinrichtung abdeckenden Haube gebildet und mit einem weiteren Paar Schwingen am Maschinengestell gelagert. Somit kann das abzuschwartende Gut in seiner Stärke bzw. Größe unterschiedlich sein, wobei durch die Schwingenanordnung die Andrückwalze das Abschwartgut entsprechend den bei ihr angreifenden Rückstellkräften in erwünschter Weise beim Förderband andrücken.

Bei der Beschickung der Vorrichtung mit einem zu behandelnden Gut, das von einer flächigen Form abweicht, wie rundliche oder zylinderartige Körper, beispielsweise Keulen, Fleischstücke, Fischstücke oder dgl., kann nur ein kleiner tangentialer Teil des zu behandelnden Gutes enthäutet werden.

Das Enthäuten muß manuell ausgeführt werden. Dies erfolgt entweder durch Verwendung eines Messers oder einer manuell betätigbaren Enthäutungsmaschine. Diese Methoden sind extrem gefährlich. Sie können Handverletzungen hervorrufen, sowie Handwurzelknochenprobleme und Handerschöpfungssyndrome zur Folge haben.

Ein Verfahren und eine Vorrichtung entsprechend den Oberbegriffen der Ansprüche 1 und 10 sind aus EP-A-0 203 447 bekannt.

Das erfindungsgemäße Verfahren mit den kennzeichnenden Merkmalen des Hauptanspruchs hat dem gegenüber den Vorteil einer in Umfangsrichtung erfolgenden Enthäutung und Abschwartung von einem Behandlungsgut. Dadurch kann das Behandlungsgut, insbesondere Fleisch-, Fischstücke oder dgl., die von einer flächigen Körperform abweichen ebenso automatisch bearbeitet werden, ohne daß eine manuelle Nacharbeit erforderlich ist. Das Behandlungsgut ist somit im wesentlichen über die gesamten Umfangsfläche im Eingriff mit der Schneideeinheit, so daß nach mindestens einer Umdrehung des Behandlungsgutes der Bearbeitungsvorgang abgeschlossen sein kann. Die Dauer der Bearbeitungszeit, die Anzahl der Umdrehungen, sowie die Drehgeschwindigkeit des Behandlungsgutes beeinflussen den Betrag des zu enthäutenden und abzuschwartenden Materials. Dieser wird ferner durch die Einstellung des Abstandes zwischen Schneideeinheit und Zugwalze bestimmt.

Eine weiterer Vorteil der Erfindung besteht darin, daß das Behandlungsgut durch eine Drehvorrichtung, in Drehung gesetzt wird. Somit kann das Behandlungsgut um eine Achse, die im wesentlichen parallel zu der Zugwalze verläuft, gedreht werden und im wesentlichen beibehalten bleiben. Diese Achse kann im wesentlichen mit den Achsen der Zugwalze und der Drehvorrichtung eine Dreiecksanordnung bilden

Nach einer vorteilhaften Ausgestaltung der Erfindung wird die bevorzugt als Lineareinheit ausgebildete Drehvorrichtung an der Schneideeinheit angrenzend positioniert. Durch das Angreifen der Zugwalze an der Unterseite des Behandlungsgutes erfährt dieses ein Impuls in Transportrichtung, während die Lineareinheit dem Behandlungsgut einen Impuls nach oben und im wesentlichen entgegen der Transportrichtung gibt. Das Zusammenwirken dieser Einflüße versetzt das Behandlungsgut in Drehung, wobei es gleichzeitig durch die Zugwalze an der Schneideeinheit vorbei zum Enthäuten geführt wird.

Nach einer weiteren vorteilhaften Ausgestaltung der Erfindung wird die Drehvorrichtung wechselseitig von einer Arbeitsposition in eine Abtransportposition bewegt. In der Arbeitsposition ist die Lineareinheit in Transportrichtung gesehen hinter der Zugwalze positioniert, um das Behandlungsgut während des Schneidvorganges wieder entgegen der Transportrichtung zu bewegen. Die Abtransportposition liegt in Transportrichtung gesehen vor der Zugwalze. Die Drehvorrichtung wird in eine Abtransportposition geführt und über oder hinter dem Behandlungsgut angeordnet. Die nun an dem Behandlungsgut angreifenden Kräfte von Lineareinheit und Zugwalze wirken in Transportrichtung und können das Behandlungsgut über die Schneideinheit hinweg aus der Enthäutungsmaschine herausführen, so daß das Behandlungsgut ohne zusätzlichen Druck über die Schneideeinheit hinweg geführt werden kann. Gleichzeitig kann vorgesehen sein, daß die Drehvorrichtung während des Abtransports des Behandlungsgutes ebenfalls in Transportrichtung bewegt wird, wobei die Bewegungsgeschwindigkeit gegenüber der des Behandlungsgutes geringer ist.

Nach einer weiteren vorteilhaften Ausgestaltung der Erfindung wird die Zufuhreinrichtung für das Abtransportieren des Behandlungsgutes soweit entgegen die Transportrichtung bewegt, daß das Behandlungsgut zwischen Schneideeinheit und Zufuhreinrichtung nach unten fallen kann und kehrt danach wieder in die Ausgangsposition zurück.

Nach einer weiteren vorteilhaften Ausgestaltung der Erfindung wird das Behandlungsgut zum Abtransport durch einen zusätzlichen Arm aus seiner Position an der Schneideeinheit seitlich herausgeführt.

Nach einer weiteren vorteilhaften Ausgestaltung der Erfindung wird ein auf der Zuführeinrichtung aufliegendes Behandlungsgut durch ein Sensorelement erkannt. In Abhängigkeit dazu wird die Drehvorrichtung in eine Arbeitsposition übergeführt und der Transportrichtung entgegenwirkend angetrieben. Ferner werden die übrigen Prozessdaten zur Bearbeitung des Behandlungsgutes für einen neuen Bearbeitungsvorgang zurückgesetzt.

Die erfindungsgemäße Vorrichtung zur Durchführung des Verfahrens mit den kennzeichnenden Merkmalen des Hauptanspruchs hat dem Stand der Technik gegenüber den Vorteil, eine vollständige Bearbeitung des Behandlungsgutes in einem Arbeitsgang zu ermöglichen. Eine mit der Zugwalze zusammenwirkende Drehvorrichtung bewirkt das Drehen des Behandlungsgutes im wesentlichen in einer Achse, die parallel zu der Zugwalze und der Schneideeinheit vorgesehen ist. Dadurch kann das Behandlungsgut in seinen gesamten Umfang durch die Schneideeinheit bearbeitet werden. Die vollständige Enthäutung kann unabhängig von der Körperform des Behandlungsgutes erfolgen. Somit können Fisch-, Fleischstücke oder dgl. in unterschiedlichen Größen Arten und Formen auf der automatischen Enthäutungsvorrichtung bearbeitet werden.

Nach einer weiteren vorteilhaften Ausgestaltung der Erfindung ist die Zufuhreinrichtung zum Bearbeiten des Behandlungsgutes in Transportrichtung gesehen direkt hinter der Schneideeinheit angeordnet und zum Abtransportieren des Behandlungsgutes ist die Zufuhreinrichtung so positioniert, daß zwischen Schneideeinheit und Zufuhreinrichtung ein Abstand vorhanden ist, der größer als die Ausmaße des Behandlungsgutes ist.

Nach einer weiteren vorteilhaften Ausgestaltung der Erfindung ist ein dem Abtransport des Behandlungsgutes dienender Arm über der oder in Transportrichtung gesehen hinter der Drehvorrichtung angebracht, der das Behandlungsgut seitlich aus seiner Position an der Schneideeinheit herausführt.

Ein weiterer Vorteil der Erfindung ist es, daß die Vorrichtung ebenso zur Bearbeitung von flächigem Behandlungsgut eingesetzt werden kann. Die Drehvorrichtung kann eine der Zugwalze entgegengesetzt wirkende Richtung eines Kraftvektors aufweisen und eventuell gleichzeitig das Behandlungsgut zum Enthäuten an der Schneideeinheit niederhalten. Sie ist jedoch in einer oberen, von der Schneideinrichtung abgehobenen Position vorgesehen.

Eine vorteilhafte Ausbildung der Erfindung ist es, daß die Drehvorrichtung in einer Arbeitsposition und in einer Abtransportposition positionierbar ist. In der Arbeitsposition ist die Drehvorrichtung an die Schneideeinheit angrenzend positioniert. Die Drehvorrichtung kann somit in der Transportrichtung des Behandlungsgutes liegen und diese sperren. Durch die Drehrichtung der Drehvorrichtung bekommt das Behandlungsgut einen Impuls, der der Transportrichtung entgegenwirkt. Somit wird das Behandlungsgut in Drehung versetzt, wobei die Drehvorrichtung derart positioniert ist, daß ein stetiger Enthäutungsprozess ermöglicht sein kann. In einer Abtransportposition ist die Drehvorrichtung oberhalb bzw. hinter dem Behandlungsgut angeordnet und unterstützt den Abtransport des Behandlungsgutes nach dem Bearbeitungsprozess.

In einer weiteren vorteilhaften Ausgestaltung der Erfindung ist die Drehvorrichtung durch eine Haltevorrichtung aufgenommen, die über wenigstens ein Paar Schwingen und einer Zylindereinheit in einer Arbeits- und Abtransportposition positionierbar ist. Die Schwingen sind an den Seitenflächen des Grundgestells schwenkbar befestigt und gelenkig mit der Haltevorrichtung verbunden. Somit kann die Haltevorrichtung horizontal in der Transportrichtung bewegbar sein. Die Zylindereinheiten, die an einem gegenüberliegenden Ende der Haltevorrichtung angreifen und ebenfalls paarweise vorgesehen sind, ermöglichen eine vertikale Auslenkung der Haltevorrichtung. Das Zusammenwirken dieser Elemente an der Haltevorrichtung ermöglichen die unterschiedliche Positionierung der Drehvorrichtung, vor allem bezüglich der vertikalen Richtung.

In einer weiteren Ausgestaltung der Erfindung ist vorgesehen, daß die Drehvorrichtung als Druckwalze gebildet ist und eine linienförmige Angriffskante aufweisen kann, die zum Angreifen an dem Behandlungsgut vorgesehen ist. Somit kann eine Kraftwirkung auf das Behandlungsgut in eine Wirkungsrichtung die der Transportrichtung im wesentlichen entgegengesetzt gerichtet ist, erfolgen. Diese linienförmige Angriffskante kann durch einen Absatz an einen zylindrischen Körper oder dgl. vorgesehen sein. In der bevorzugten Ausführungsform ist eine Anordnung von schaufelartigen Rädern mit radial nach außen weisenden Schaufeln vorgesehen. Diese sind derart ausgerichtet, daß die äußeren Enden der Schaufeln eine linienförmige Kante bilden.

In einer weiteren vorteilhaften Ausgestaltung ist vorgesehen, daß die schaufelartigen Räder an deren äußeren Enden abgewinkelte, nachgiebige Finger aufweisen. Diese wirken bei einer Drehrichtung, die der Zugwalze entspricht, schaufelförmig. Dadurch wird ein besseres Angreifen an dem Behandlungsgut ermöglicht. In einer Abtransportposition in der die Drehrichtung gegenüber der Arbeitsposition umgekehrt ist, können die abgewinkelten Finger flächig an dem Behandlungsgut angreifen und eine bessere Druckkraft zum Herausführen des Behandlungsgutes aus der Enthäutungsvorrichtung bewirken. Die Schaufelräder sind vorteilhafterweise aus Kunststoff oder Gummi gebildet, die den Anforderungen für den Einsatz bei der Bearbeitung von Lebensmitteln entspricht.

In einer weiteren vorteilhaften Ausgestaltung der Erfindung ist vorgesehen, daß eines der schaufelartigen Räder gegenüber den übrigen auf der Drehvorrichtung angeordneten Schaufelrädern versetzt ist. Dieses kann die Drehung des Behandlungsgutes, insbesondere bei einer unförmigen Gestalt, fördern. Das Behandlungsgut kann somit einen tangentialen Impuls enthalten, wodurch das Behandlungsgut in seiner zugeführten Position verändert werden kann.

In einer weiteren vorteilhaften Ausgestaltung der Erfindung ist vorgesehen, daß unabhängig von der Position der Drehvorrichtung zu der Schneideinheit diese antreibbar ist. Der Antrieb erfolgt über eine Antriebseinrichtung, die von dem Grundgestell über die Schwinge zu der Haltevorrichtung umgesetzt wird. Diese ist über Antriebsketten realisiert, kann jedoch durch einen Riemenantrieb oder dgl. erfolgen.

Nach einer weiteren vorteilhaften Ausgestaltung der Erfindung ist vorgesehen, daß die die Drehvorrichtung aufnehmende Haltevorrichtung unabhängig des Grundgestells der Schneideinheit zuordenbar ist. Die Enthäutungs- und Abschwartmaschine kann schnell und einfach umgerüstet bzw. mit dieser Komponente erweitert werden. Die Haltevorrichtung ist zu der Schneideinheit positionierbar und kann die Drehvorrichtung selbsttragend aufnehmen. Es kann auch vorgesehen sein, daß die Haltevorrichtung auf das Grundgestell aufsetzbar ist. Durch lösbare Befestigungselemente kann die Haltevorrichtung mit dem Grundgestell der Enthäutungs- und Abschwartmaschine in einer Grundposition zu der Schneideinheit gesichert sein. Die frei zuordenbare Haltevorrichtung kann mit einem eigenen Antrieb, der pneumatisch, hydraulisch, oder elektrisch ausgebildet sein kann, zur Steuerung und Regelung der Drehvorrichtung versehen sein. Es können ferner auch Kupplungselemente vorgesehen sein, die an die Antriebseinheit der Enthäutungs- und Abschwartmaschine anschließbar sind. Dies ist besonders bei den auf dem Grundgestell aufgesetzten Drehvorrichtungen von Vorteil. Diese autarke, die Drehvorrichtung aufnehmende Haltevorrichtung kann bedarfsorientiert unterschiedlichen Enthäutungs- und Abschwartmaschinen zugeordnet werden. Die Dreh- und Haltevorrichtung kann auch durch einen mehrachsigen Roboter mit entsprechenden Greiferelementen ausgebildet sein.

Nach einer weiteren vorteilhaften Ausgestaltung der Erfindung ist die Drehvorrichtung als Lineareinheit ausgebildet. Diese Drehvorrichtung ist austauschbar an der Haltevorrichtung angeordnet. Sie kann einen pneumatischen, hydraulischen und/oder elektrischen Antrieb oder dgl. aufweisen. An dieser Lineareinheit ist vorteilhafterweise eine Angriffseinrichtung anbringbar, die eine vordere Angriffskante zum Angreifen an dem Behandlungsgut und zum Drehen des Behandlungsgutes aufweist. Diese Angriffseinrichtung ist austauschbar an der Lineareinheit befestigt, so daß eine einfache Umrüstung und Anpassung auf unterschiedliches Behandlungsgut ermöglicht ist.

Nach einer weiteren vorteilhaften Ausgestaltung der Erfindung ist vorgesehen, daß die Lineareinheit in der Arbeits- und Abtransportposition an der Haltevorrichtung bewegbar, insbesondere schwenkbar, angeordnet ist. Somit können zusätzlich zu der Arbeits- und Abtransportposition die Lineareinheiten in einem optimalen Anstellwinkel zu dem Behandlungsgut positioniert sein, so daß eine Drehung des Behandlungsgutes gewährleistet ist. Die Lineareinheit kann bspw., in einer Position oberhalb des Fleischgutes positioniert sein. Somit kann aus dieser Position die Lineareinheit in eine Arbeitsposition und in eine Abtransportposition schwenkbar sein, so daß die Angriffseinrichtung in Transportrichtung gesehen zum einen hinter dem Behandlungsgut und zum anderen vor dem Behandlungsgut angreifen kann. Ferner kann die Lineareinheit mit Stellgliedern bzw. Antriebelemente in unterschiedlichen Positionen zu der Haltevorrichtung verschiebbar sein, so daß die für die Arbeits- und Abtransportposition notwendige Anordnung zu dem Behandlungsgut ermöglicht ist.

Nach einer weiteren vorteilhaften Ausgestaltung der Erfindung ist vorgesehen, daß wenigstens eine Lineareinheit mit ihrer vorderen Angriffskante an dem Behandlungsgut angreifbar angeordnet ist, wobei die Angriffseinrichtung vorzugsweise einen hakenförmigen Bahnverlauf aufweist, um das Behandlungsgut in Drehung zu bringen und zu halten. Dabei sind die Lineareinheiten zeitlich versetzt zum Durchlaufen des Bahnverlaufes angesteuert, so daß immer wenigstens eine Angriffseinheit an dem Fleischstück im Eingriff ist. Die Angriffeinrichtung kann stab- oder leistenförmig ausgebildet sein und an dessem unteren Ende die Angriffskante aufweisen. Durch die Anordnung mehrerer Angriffseinrichtungen nebeneinander und der zeitversetzten Ansteuerung bilden diese Antriebseinrichtungen einen wellenförmigen Verlauf. Dieser kann zusätzlich das Fleisch um eine weitere von der parallen zur Zugachse verlaufenden Achse abweichend drehen, so daß eine vollständige Enthäutung und Abschwartung gewährleistet ist.

Nach einer weiteren vorteilhaften Ausgestaltung der Erfindung ist die Angriffseinrichtung kammartig ausgebildet. Deren freien Enden der Zinken ist wiederum mit den Angriffskanten versehen. Durch Ineinandergreifen von wenigstens zwei kammartig ausgebildeten Angriffseinrichtungen, die in ihrer Bewegung gegenläufig zueinander sind, kann das Behandlungsgut ebenso in Drehung versetzt werden.

In einer weiteren vorteilhaften Ausgestaltung der Erfindung ist eine Steuereinheit zur Steuerung der Enthäutungsmaschine vorgesehen. Diese Steuereinheit regelt sämtliche Prozesse die zur Bearbeitung eines Behandlungsgutes erforderlich sind. Die Steuereinheit kann unterschiedliche Parameter, wie Drehgeschwindigkeit der Druckwalze bzw. Antriebsparameter für Linienheit sowie die Zeitdauer des an der Schneideeinheit rotierenden Behandlungsgutes steuern. Somit kann der Betrag des zu enthäutenden Materials bestimmt werden. Dies ist ferner von der Einstellung des Abstandes zwischen der Schneideeinheit und der Zugwalze abhängig. In einer Arbeitsposition wird von der Steuereinheit die Drehrichtung bzw. Bewegungsrichtung der Drehvorrichtung, die Drehgeschwindigkeit, sowie die Positionierung der Haltevorrichtung zu der Zugwalze angesteuert. Nach Ablauf der Bearbeitungsdauer wird über die Steuereinheit die Haltevorrichtung in eine Abtransportposition übergeführt. Dabei werden die Zylindereinheiten und Schwingen betätigt, sowie die Wirkrichtung der Drehvorrichtung umgekehrt. Es können ferner Sensoren vorgesehen sein, die die Zylindereinheiten ansteuern, damit ein erforderlicher Druck über die Drehvorrichtung auf das Behandlungsgut übertragen wird, um ein schnelles Abtransportieren zu ermöglichen.

In einer weiteren vorteilhaften Ausgestaltung ist vorgesehen, daß ein Benutzerbedienfeld mit der Steuereinheit verbunden ist. Dadurch kann der Benutzer eine individuelle Programmeinstellung entsprechend dem momentan zu bearbeitenden Behandlungsgut vornehmen. Gleichzeitig kann durch dieses Benutzerbedienfeld bei eventuell auftretenden Fehlern über eine Fehleranzeige dem Benutzer übermittelt werden. Es kann ferner vorgesehen sein, daß dieses Benutzerbedienfeld transportabel ist, so daß es in der Arbeitsvorbereitung beispielsweise in einem Büro programmiert werden kann. Ferner kann eine Fernabfrage über aktuelle Betriebsdaten vorgesehen sein. Es kann des weiteren vorgesehen sein, daß die Steuereinheit sämtliche Betriebsdaten aufnimmt um für eine spätere Auswertung bereitzustellen.

Weitere Vorteile und vorteilhafte Ausgestaltungen der Erfindung sind der nachfolgenden Beschreibung, der Zeichnung und den Ansprüchen entnehmbar
Ein Ausführungsbeispiel des Gegenstandes der Erfindung ist in den Zeichnungen dargestellt und im folgenden näher beschrieben. Es zeigen:
- Fig. 1: Eine perspektivische Ansicht auf eine Enthäutungsvorrichtung,
- Fig. 2: eine schematische Teilansicht der automatischen Enthäutungsvorrichtung in einer Arbeitsposition,
- Fig. 3: eine schematische Teilansicht der automatischen Enthäutungsvorrichtung in Abtransportposition,
- Fig. 4: eine Seitenansicht der automatischen Enthäutungsvorrichtung mit deren Antriebsverbindungen,
- Fig. 5: eine Hinteransicht der Enthäutungsvorrichtung mit ihren Antriebsmotoren,
- Fig. 6: eine weitere Seitenansicht der automatischen Enthäutungsvorrichtung mit einem Antrieb einer Haltevorrichtung,
- Fig. 7: eine Vorderansicht der automatischen Enthäutungsvorrichtung,
- Fig. 8: eine Seitenansicht mit einer Steuer- und Kontrolleinheit, und
- Fig. 9: das Schaltdiagramm zur Steuerung der automatischen Enthäutungsvorrichtung.

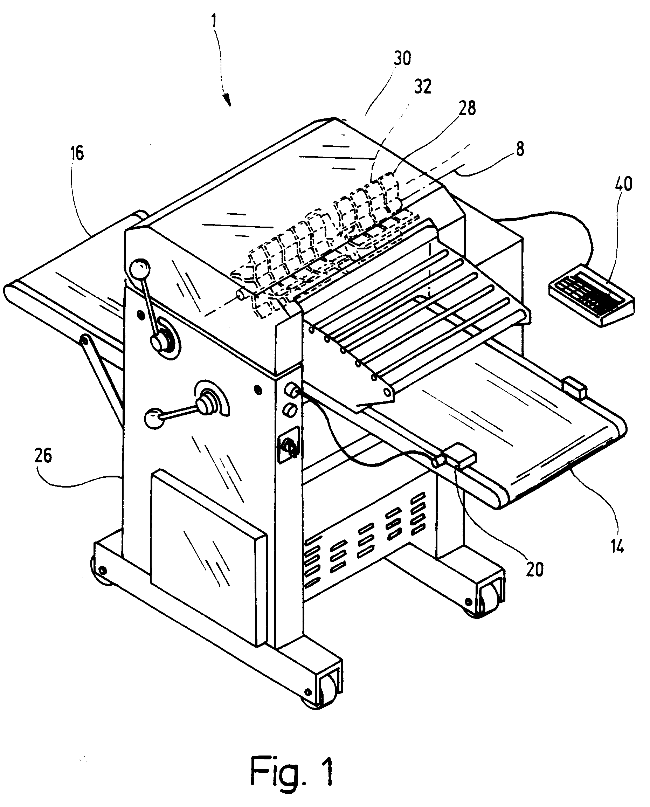

Die Zeichnung - Fig. 1 in perspektivischer Ansicht zeigt eine automatische Enthäutungs- und Abschwartvorrichtung 1 mit einer Zuführeinrichtung 14, die das zu behandelnde Gut 36, insbesondere das Fleischstück, zum Enthäuten einer Schneideinheit 22, (nicht dargestellt) zuführt und mit einer Abtransporteinrichtung 16 das behandelnde Gut 36 aus der Vorrichtung 1 herausführt. An einem vorderen Ende der Zuführeinrichtung 14 ist ein Sensor 20 vorgesehen. Dieser Sensor 20 erkennt, wann ein weiteres Fleischstück 36 der Enthäutungsvorrichtung 1 zugeführt wird. Ein mit der Enthäutungsvorrichtung 1 verbundenes Benutzerbedienfeld 40 ermöglicht dem Benutzer unterschiedliche Parameter und Daten der Steuereinheit 100 (nicht dargestellt) einzugeben. In der bevorzugten Ausführungsform weist das Benutzerbedienfeld 40 eine Sensortastatur mit einer Fließkristallanzeige auf. Des weiteren ist in einem oberen Teil der Enthäutungsvorrichtung 1 eine Haltevorrichtung 30 vorgesehen, die eine Drehvorrichtung 28, insbesondere eine Druckwalze 28 mit flexiblen Fingern 32, die gestrichelt dargestellt sind, aufnimmt. Diese Haltevorrichtung 30 kann von einer Haube vollständig abgedeckt sein.

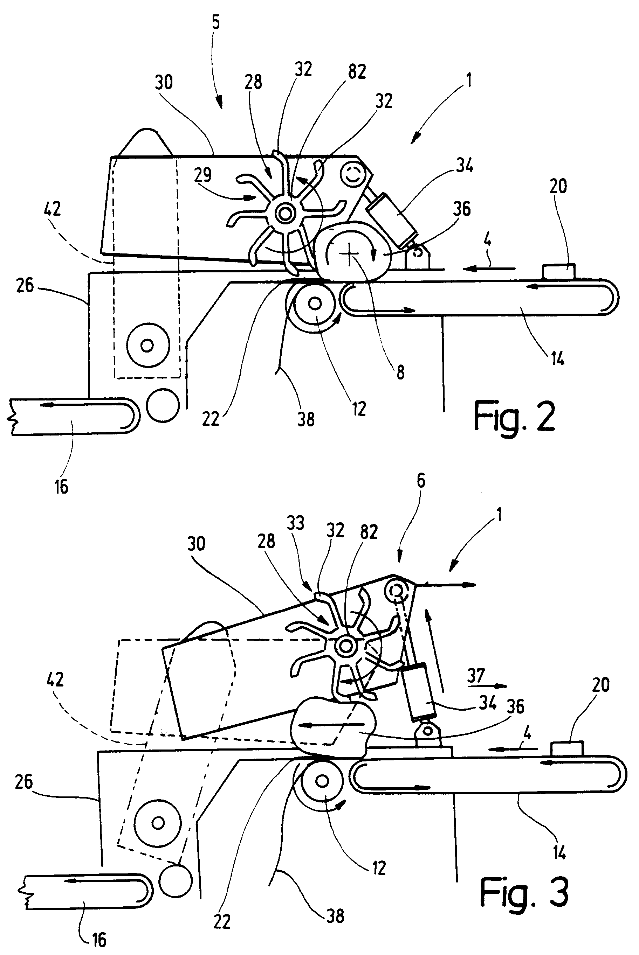

Figur 2 zeigt eine Teilansicht der automatischen Enthäutungsvorrichtung 1 in ihrer Arbeitsposition 5. Das Fleischstück 36 wird über eine Zuführeinrichtung 14 an dem Sensor 20 vorbei, der Zugwalze 12 und der Schneideeinheit 22 zum Enthäuten zugeführt. In der bevorzugten Ausführungsform ist die Schneideeinheit 22 als Schneidklinge ausgebildet. Es kann jedoch auch vorgesehen sein, daß andere Schneidevorrichtungen wie Laser oder dergleichen eingesetzt werden. Die Druckwalze 28 ist oberhalb und geringfügig hinter der Zugwalze 12 in Transportrichtung 4 gesehen positioniert. In der Arbeitsposition 5 weisen die Druckwalze 82 und Zugwalze 12 die selbe Drehrichtung auf. Sobald das Fleischstück 36 in Kontakt mit der Zugwalze 12 kommt, greifen die Zähne der Zugwalze 12 an dem Fleischstück 36 an und bewegen es in Transportrichtung 4, um es der Schneidklinge 22 zuzuführen.

Die Druckwalze 28 ist aus einer Vielzahl von Schaufelrädern 29 mit nachgiebigen Fingern 32 vorgesehen, die auf einer vielzahl von Naben 82 kammartig entlang einer Achse, wie in Fig. 1 dargestellt ist, vorgesehen sind. Die abgewinkelte Anordnung der Finger 32 ermöglichen der Druckwalze 28 ein sicheres Angreifen an dem Fleischstück 36. Zusätzlich ist eines der Schaufelräder 29 abweichend von den anderen Schaufelrädern 29 positioniert, um die Enthäutung des Fleischstückes 36 zu fördern. Die gleichzeitige Rotation der Druckwalze 28 in Verbindung mit der Zugwalze 12 bewirken, daß das Fleischstück 36 um eine im wesentlichen feststehende Achse gedreht wird. Dabei enthäutet die Schneidklinge 22 das Fleischstück 36, wobei gleichzeitig das zu enthäutende Material 38 bzw.die Schwarte davon nach unten abgeführt wird.

Der Betrag des enthäuteten Materials 38 ist gleich dem Abstand zwischen der Zugwalze 12 und der Schneidklinge 22, die sich mit der Anzahl der Umdrehungen des Fleischstückes 36 multipliziert. Die Anzahl der Umdrehungen des Fleischstückes 36 ist von der Umfangsgröße des Fleischstückes 36, der Drehgeschwindigkeit der Druckwalze 28 und der Zugwalze 12 sowie von der Zeit abhängig, in der das Fleischstück 36 durch die Schneidklinge 22 enthäutet wird. Somit kann der Betrag des zu enthäutenden Materials 36 durch die Veränderung von Geschwindigkeit der Druckwalze 28 und der Verweilzeit des Fleischstückes 36 an der Schneideeinheit 22 bestimmt werden.

Nachdem der gewünschte Betrag des zu enthautenden Materials 38 von dem Fleischstück 36 abgeschnitten wurde, wird das Fleischstück 36 aus der Enthäutungsvorrichtung 1 herausgeführt. Das Abtransportieren des Fleischstückes 36 aus der Enthäutungsmaschine 1 ist in Figur 3 dargestellt. Eine Haltevorrichtung 30 beginnt mit einer Vorwärtsbewegung, die entgegengesetzt zu der Transportrichtung 4 ist, während zur selben Zeit die Druckwalze 28 in Stillstand gesetzt wird. Die Vorwärtsbewegung der Haltevorrichtung 30 bewirkt, daß das Fleischstück 36 in Pfeilrichtung 37 geschoben wird und frei von der Schneideeinheit 22 auf dem inneren Ende der Zuführeinrichtung 14 aufliegen kann. Zu diesem Zeitpunkt beginnt die Druckwalze 28 sich entgegen dem Uhrzeigersinn zu drehen und wandert über oder hinter das Fleischstück 36. In Verbindung mit der Zuführeinrichtung 14 greift die Druckwalze 28 an dem Fleischstück 36 an und bewegt dieses in Transportrichtung 4 durch die Enthäutungsvorrichtung 1 hindurch. Zusätzlich bewegt sich die Haltevorrichtung 30 in eine rückwärtige Richtung und bewirkt in Verbindung mit der Zuführeinrichtung 14, der Druckwalze 28 und der Zugwalze 12, daß das Fleischstück 36 schnell an der Schneidklinge 22 vorbei geführt wird. Das schnelle Herausführen des Fleischstückes 36 aus der Maschine 1 bewirkt, daß das zusätzliche Beschneiden des Fleischstückes 36 verringert wird und lediglich auf dessen Unterseite ein geringer Abtrag erfolgt. Die Abtransporteinrichtung 16 führt das Fleischstück 36 aus der Maschine 1 heraus. Die Zufuhr- und Abtransporteinrichtung 14 und 16 können vorteilhafterweise als Bandförderer ausgebildet sein.

Figur 3 zeigt des weiteren, daß die Haltevorrichtung 30 durch eine Zylindereinheit 34, die mit Öl jedoch vorzugsweise mit Luft betrieben sein kann, nach oben und nach vorne bewegt werden kann. Dies ermöglicht, daß die Druckwalze 28 für größere Fleischstücke 36 geeignet ist und an unterschiedliche Größen anpaßbar ist.

Sobald das Fleischstück 36 durch die Abtransporteinrichtung 16 aus dem hinteren Teil der Enthäutungsvorrichtung 1 herausgeführt wurde, ist die Vorrichtung 1 bereit ein neues Fleischstück 36 zu bearbeiten. Die Zuführeinrichtung 14 fördert ein weiteres Fleischstück zur Enthäutung an dem Sensor 20 vorbei, der eine Steuereinheit 100 zurücksetzt und System einen neuen Arbeitsvorgang auslöst und die Haltevorrichtung 30 in eine Arbeits- oder Enthäutungsposition 5 bringt. Ferner wird die Druckwalze 28, die im Gegenuhrzeigersinn rotiert abgebremst und in Uhrzeigersinn gedreht. Das nachfolgende Fleischstück 36 ist durch die Zuführeinrichtung 14 der Zugwalze 12 zwischenzeitlich zugeführt, die in Verbindung mit der Druckwalze 28 das Fleischstück 36 wieder mit der Schneidklinge 22 zur Enthäutung in Eingriff bringt und einen neuen Enthäutungsvorgang durchführt.

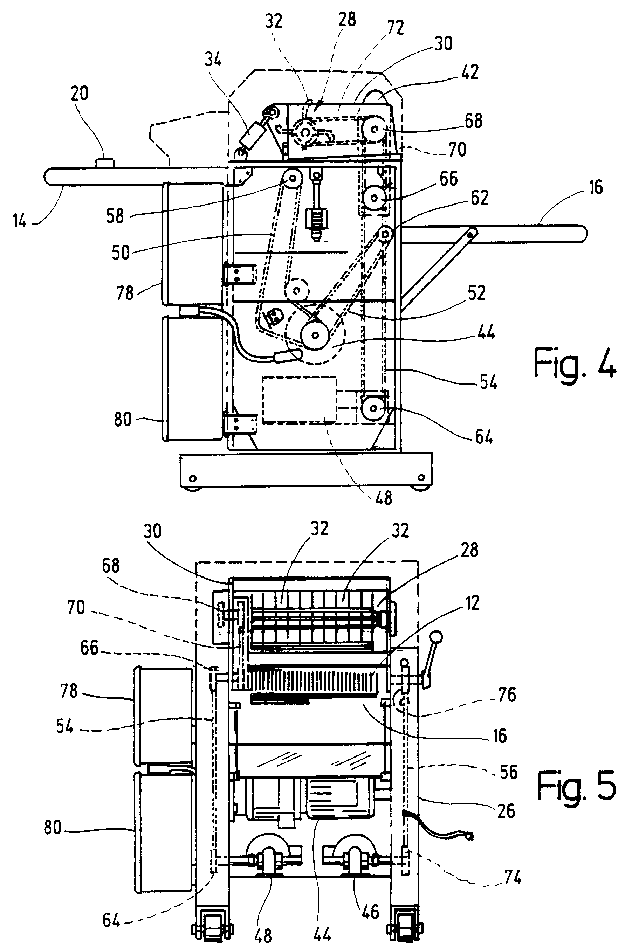

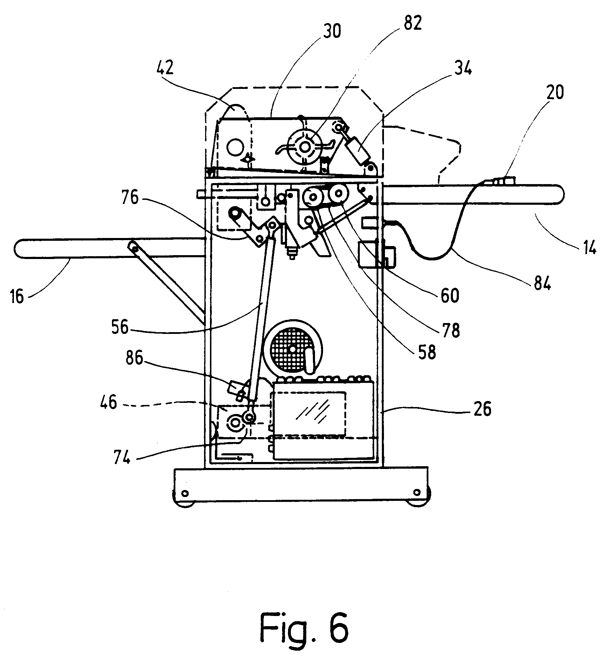

Figur 4 zeigt die Verbindung von Antriebsmotoren mit der Halteeinrichtung 30, Zuführeinrichtung 14, Abtransporteinrichtung 16, Zugwalze 12 und Druckwalze 28. Ein Hauptantriebsmotor 44 ist mit der Zuführeinrichtung 14 durch eine Antriebskette 50 über Zahnräder 85 und 60 (Figur 6) verbunden. Der Hauptantrieb 44 treibt ebenso die Zugwalze 12 durch die Antriebskette 50 und das Zahnrad 58 an. Des weiteren ist der Hauptantrieb 44 für den Antrieb der Abtransporteinrichtung 16 über eine Antriebskette 52 und ein Zahnrad 62 verantwortlich. In einer bevorzugten Ausführungsform ist ein Gleich-/Wechselstrommotor vorgesehen. Desweiteren können Riemenantriebe oder dgl. eingesetzt werden.

Die Druckwalze 28 ist durch einen Druckwalzenmotor 48 über Antriebsketten 54, 70 und 72 und über Zahnräder 64, 66 und 68 angetrieben. Das Zahnrad 68 ist innerhalb der Schwinge 42 der Haltevorrichtung 30 vorgesehen, wobei gleichzeitig eine in Transportrichtung 4 horizonztale seitliche und vertikale Bewegung der Haltevorrichtung 30 und eine Drehung der Druckwalze 28 ermöglicht ist. Der Antriebsmotor 28 ist in seiner Geschwindigkeit regelbar und in seiner Drehrichtung umschaltbar, um die Arbeits- und Abtransportfunktionen der Druckwalze 28 zu ermöglichen. Unterschiedliche Einstellungen von Parametern ermöglichen des weiteren die Anpassung an die Fleischstücke 36 in Größe, Beschaffenheit und Grad der Enthäutung.

In Figur 5 ist eine Hinteransicht der Enthäutungsmaschine 1 mit drei Antriebsmotoren 44,46 und 48 dargestellt. Der Druckwalzenmotor 48 ist mit der Druckwalze 28 über eine Getriebeeinrichtung bzw. Zahnräder 64, 66 und 68 und deren Antriebsketten 54, 70 und 72 (nicht dargestellt) verbunden. Ferner ist der Antriebsmotor 46 der Haltevorrichtung 30 dargestellt, der über einen Pendelarm 74 mit der Steuerwelle 56 der Haltevorrichtung 30 verbunden ist.

Figur 6 zeigt eine mit den Antriebsgliedern, 46, 74, 56, 76 verbundene der Haltevorrichtung 30. Die Haltevorrichtung 30 ist über eine Schwinge 42 und dem Verbindungshebel 76 mit der Steuerwelle 56 verbunden. Die Steuerwelle 56 ist mit dem Antriebsmotor 46 über dem Pendelarm 74 verbunden. Die Drehung des Motors 46 bewirkt eine Drehung des Pendelarmes 74, der diese auf die Steuerwelle 56 übertragt und in eine obere oder untere Position 5 oder 6 bewegt wird, wobei der Verbindungshebel 76 um einen Drehpunkt geschwenkt wird, der die Schwinge 42 betätigt, wodurch die Haltevorrichtung 30 nach vorne oder nach hinten bewegt wird.

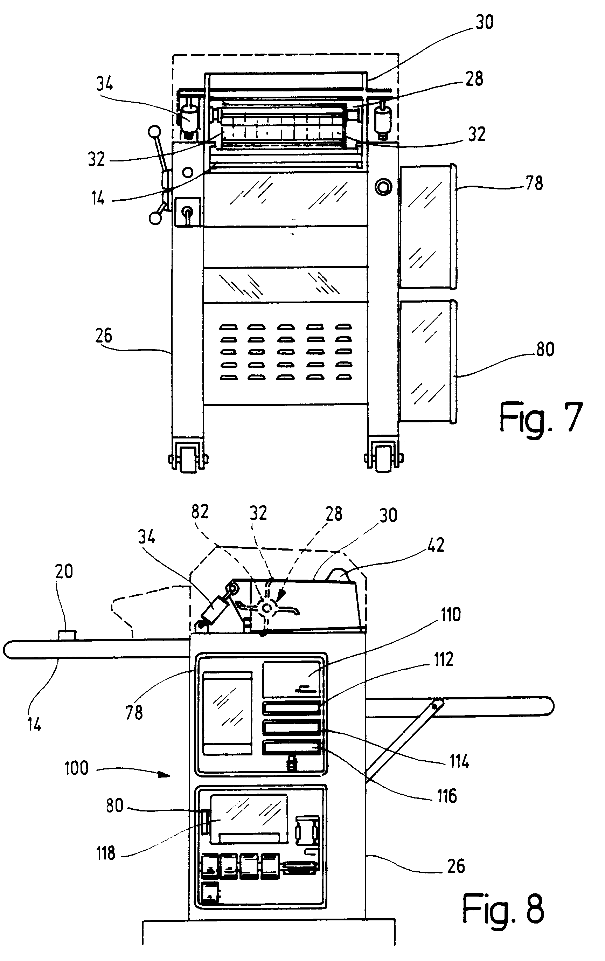

Aus Figur 7 geht eine Vorderansicht der Enthäutungsmaschine 1 hervor. Diese zeigt die Haltevorrichtung 30, die Druckwalze 28 und deren flexible Finger 32, den Druckluftzylinder 34 und die Zuführeinrichtung 14. An einer Längsseite der Enthäutungsmaschine 1 sind ein oberer und unterer Schaltkasten 78 und 80 zur Aufnahme der Steuereinheit 100 vorgesehen.

Figur 8 zeigt eine Seitenansicht auf die Schaltkasten 78 und 80 mit deren Steuereinheit 100. Diese kann für den jeweiligen Arbeitsvorgang programmiert werden und an die unterschiedliche Größen des Fleischstückes 36 sowie deren Beschaffenheit und Betrag der Enthäutung angepasst sein. Die Steuereinheit 100 umfaßt eine zentrale Recheneinheit 110, die zur Speicherung und Verarbeitung der Arbeitsbefehle vorgesehen ist. Die Steuereinheit 100 umfaßt des weiteren DC-Eingänge 112, DC-Ausgänge 114 und Analog-Ausgänge 116, die alle zur Überwachung der unterschiedlichen Sensorenanordnung der Enthäutungsvorrichtung 1 vorgesehen sind, sowie Eingänge und Ausgänge der zentralen Recheneinheit 110.
Der Analog-Ausgang 116 erhält Steuerdaten des Motors von der zentralen Recheneinheit 112 und übermittelt diese Daten einem Spannungsregler 118. Der Spannungsregler 118 wandelt diese Daten um, die zur Kontrolle der Geschwindigkeit und Drehrichtung des Druckwalzenmotors 48 verwendet werden.

Die zentrale Recheneinheit 110 ist mit dem Benutzerbedienfeld 40 verbunden. Dieses kann unterschiedliche Eingaben der Parameter bezüglich unterschiedliche Fleischstücke 36 entgegen nehmen und an die zentrale Steuereinheit 100 weiterleiten. Mehrere Parameter werden von der Steuereinheit 100 verwendet um die Bearbeitung der Enthäutungsmaschine 1 an die entsprechend unterschiedlichen Fleischstücke anzupassen. Dies beinhaltet: die Länge der Zeit, die die Druckwalze 28 das Fleischstück 36 dreht, während es von der Schneidklinge 22 enthäutet wird; die Länge der Zeit, die die Haltevorrichtung 30 in der vorderen Abtransportposition 16 ist; die Arbeitsposition 5 der Haltevorrichtung 30 während der Enthäutung; die Vorwärts- und Rückwärtsdrehgeschwindigkeit der Druckwalze 28; die Länge der Zeit, die die Druckwalze 28 zum Abtransportieren in Drehung gehalten wird.

In einer bevorzugten Ausführungsform erfolgen diese Eingaben durch den Benutzer über das Benutzerbedienfeld 40 und können den unterschiedlichen Anforderungen bezüglich des Fleischstückes 36 angepaßt werden. Es ist ebenfalls vorgesehen, daß unterschiedliche Daten automatisch durch zusätzliche Sensoren eingestellt werden können, um eine weitere Automation des Prozesses zu ermöglichen. Somit können die von dem Benutzer erforderlichen Eingaben auf ein Minimum beschränkt werden oder sogar entfallen. Beispielsweise kann ein Sensor vorgesehen sein, der die Größe des Fleischstückes 36 bestimmt während das Fleisch durch die Zuführeinrichtung 14 der Schneideeinheit 22 zugeführt wird. Die Steuereinheit 100 kann diese Daten umsetzen und die erforderlichen Parameter einstellen. Zusätzlich könnte ein Sensor zur Bestimmung der Menge des zu enthäutenden Materials 38 Einsatz finden, damit die diesbezüglichen Parameter analog eingestellt werden können. Eine wichtige Funktion des Benutzerbedienfeldes 40 und der Steuereinheit 100 ist die Überwachung der unterschiedlichen Sensoren innerhalb der Enthäutungsmaschine 1. Viele der Sensoren sind zur Erkennung von Fehlern und für die Sicherheit der Maschine 1 vorgesehen, die bei einer Fehlermeldung die Stromversorgung der Enthäutungsmaschine 1 unterbrechen. Diese Fehler sind in einer Anzeige des Benutzerbedienfeldes 40 angezeigt. Einige der Sensoren, die durch die Steuereinheit 100 überwacht werden, sind beispielsweise Reinigungsbürsten vorhanden, Abdeckung vorhanden, Motor überlastet und Versorgungsspannung vorhanden. Zusätzlich kann die Steuereinheit 100 mehrere Bewegungssensoren überwachen, wie beispielsweise der Haltevorrichtungssensor 86, der anzeigt ob die Haltevorrichtung 30 in einer hinteren Arbeitsposition 5 oder vorderen Abtransportposition 16 ist. Ferner ist die Überwachung des Positionserkennungssensor 20 vorgesehen um zu bestimmen, wann die zeitliche Abfolge der Bearbeitungsschritte für die Enthäutung in Gang gesetzt werden.

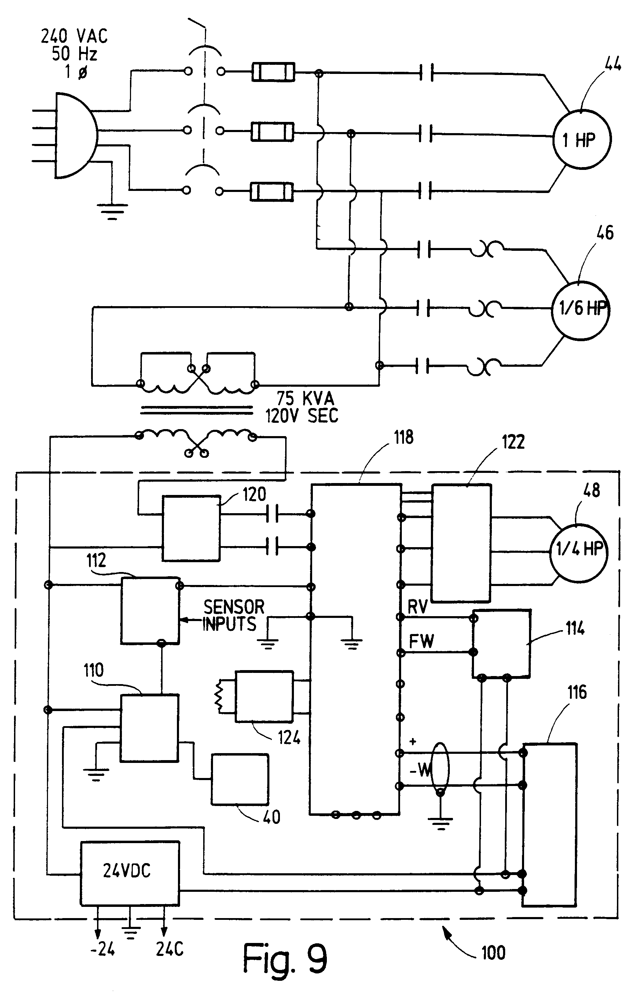

Figur 9 zeigt eine schematische Schaltungsanordnung der Steuereinheit 100 und deren Verbindung mit dem Benutzerbedienfeld 40 und den Steuermotoren 40, 46 und 48. Das Herz der Steuereinheit 100 ist die zentrale Recheneinheit 110, welche mit dem Benutzerbedienfeld 40, DC-Eingang 112, DC-Ausgang 114 und dem analogen Ausgang 116 verbunden sind. Die Wechselwirkung zwischen Benutzer und Steuereinheit 100 erfolgt durch das Benutzerbedienfeld 40, welches elektrisch mit der zentralen Recheneinheit 110 in Verbindung steht. Der Benutzer kann unterschiedliche Parameter, die in Verbindung mit einem zu enthäutenden Fleischstück stehen, über das Benutzerbedienfeld 40 eingeben, welches die Daten umsetzt und zu der zentralen Recheneinheit 110 zur Verarbeitung der Daten übermittelt. Die zentrale Recheneinheit 110 nimmt ebenso unterschiedliche Alarm-Parameter von dem DC-Eingang 112 auf, um zu überprüfen, ob die Enthäutungsmaschine 1 in einem sicheren Arbeitszustand ist, bevor die Daten weiterverarbeitet werden. Die zentrale Recheneinheit 110 verarbeitet dann die von dem Benutzer eingegebenen Daten und errechnet die geeignete Drehgeschwindigkeit, die Position der Haltevorrichtung 30 und ähnliches und sendet diese Daten zu dem analogen Ausgang 116.

Der analoge Ausgang 116 sendet wiederum diese Daten zu dem Spannungsregler 118, welcher die Daten in unterschiedlicher Spannungen zur Steuerung der Motoren umwandelt. Der Strom ist durch die zentrale Recheneinheit 110 in Abhängigkeit mit der gewünschten Drehgeschwindigkeit des Motores veränderbar. Dieser Strom kann in unterschiedliche Spannungen durch den Spannungsregler 118 umgewandelt werden und an dem Druckwalzenmotor 48 anliegen. Zusätzlich ist die zentrale Recheneinheit 110 mit dem DC-Ausgang 114 verbunden, welcher ebenso mit dem Spannungsregler 118 verbunden ist. Der DC-Ausgang 114 ist zur Kontrolle der Drehrichtung des Druckwalzenmotores 48 eingesetzt.

Aus der schematischen Schaltungsanordnung aus Figur 9, geht ein Filter für die Versorgung 120, ein Phasen-/Erdschlußfehlerdetektor 122 und ein dynamisches Unterbrechungsmodul 124 hervor. Der Filter 120 ist zur Filtrierung der Versorgungsspannung des Druckwalzenmotors 48 vorgesehen. Der Phasen-/Erdschlußfehlerdetektor 122 ist zwischen dem Druckwalzenmotor 48 und dem Spannungsregler 118 angeordnet und schaltet die Spannung zum Schutze der beiden Teile, wenn ein Kurzschluß auftritt,ab. Schließlich ist das Unterbrechungsmodul 124 an dem Spannungsregler 118 angeschlossen und kann diesen vor Stromspitzen, die durch den Wechsel der Drehrichtung des Druckwalzenmotors 48 resultieren können, schützen.

In der bevorzugten Ausführungsform beginnt die Enthäutung, sobald das Fleischprodukt 36 den Sensor 20 passierte. Zu diesem Zeitpunkt initiert die Steuereinheit 100 das Gesamtsystem zum Zurücksetzen sämtlicher Parameter auf ihre Ausgangswerte. Die Haltevorrichtung 30 nimmt die Ausgangs-/Arbeitsposition 5 (Figur 2) ein, während die Zuführeinrichtung 14 das Fleischstück 36 zu der Zugwalze 12 und der Druckwalze 28 hintransportiert. Sobald das Fleischstück 36 die Schneidklinge 22 erreicht hat, greift die Druckwalze 28 an dem Fleischstück 36 an und gibt einen Impuls nach oben und entgegen der Transportrichtung 4. Die Zugwalze 12, die das Fleischstück 36 auf dessen Unterseite in Transportrichtung 4 zu der Schneidklinge 22 hin bewegt gibt dem Fleischstück 36 einen Impuls in Transportrichtung. Das Zusammenwirken dieser Krafteinflüsse bewirkt, daß das Fleischstück 36 im wesentlichen um eine feststehende Achse bzw. die Längsachse des Fleischstückes 36 selbst über dem Messer 22 dreht. Zusätzlich ist das Fleischstück 36 durch das Eigengewicht in stetigem Kontakt mit der Schneidklinge 22, wodurch ein geringer Betrag von dem Fleischstück 36 abgeschnitten wird, der dem Abstand zwischen der Schneidklinge 22 und der Zugwalze 12 entspricht. Des weiteren ist der Betrag des abgeschnittenen Materials von der Zahl der Umdrehungen des Fleischstückes 36 abhängig, während es mit der Schneidklinge 22 in Kontakt ist. Dies ist von der Rotationsgeschwindigkeit und der Dauer der Zeit, in der das Fleischstück 36 rotiert, abhängig. Beide Parameter können von dem Benutzer eingegeben und jederzeit geändert werden. Sobald die Zeit für die Rotation der Druckwalze 28 abgelaufen ist, wird die Haltevorrichtung 30 nach vorne bewegt und die Druckwalze 28 also entgegen der Transportrichtung 4 angehalten, wobei das Fleischstück 36 von der Schneidklinge 22 entfernt wird. Die Druckwalze 28 beginnt sich in entgegengesetzter Richtung zu drehen. Da die Zuführeinrichtung 14 mit dem Transport des Fleischstückes 36 auf die Druckwalze 28 zu erfolgt, und die Haltevorrichtung 30 über die Zylinder 34 und die Schwingen 42 nach oben durch im wesentlichen der Transportrichtung 4 entgegengesetzt bewegt wurde, kann die Druckwalze 28 wieder an dem Fleischstück 36 angreifen. Durch die schwenkbare Lagerung an der Schwinge 42 kann die Druckwalze 28 über das Fleischstück wandern und einen Impuls in Transportrichtung 4 geben. Zur gleichen Zeit wird die Haltevorrichtung 30 in Transportrichtung 4, bewegt und an der Schneidklinke 22 vorbeigeführt. Auf der Abtransporteinrichtung 16 wird das bearbeitete Fleischstück 36 zur Entnahme aus der Enthäutungsmaschine 1 herausgeführt.

## Patentansprüche

1. Verfahren zum Enthäuten und Abschwarten eines Behandlungsgutes, insbesondere Fleisch-, Fischstücke oder dgl.,in einer Enthäutungsmaschine (1) bei dem das Behandlungsgut (36) auf eine Zuführeinrichtung (14) aufgebracht und in Transportrichtung (4) einer Zugwalze (12) zugeführt wird, und bei dem das Behandlungsgut (36) durch die daran angreifende Zugwalze (12) zu einer Schneideeinheit (22) transportiert wird,
dadurch gekennzeichnet, daß das Behandlungsgut (36) zum Enthäuten an der Schneideeinheit (22) mit wenigstens einer Drehvorrichtung (28) um seine eigene im wesentlichen parallel zu der Zugwalze (12) verlaufende Achse (8) gedreht wird.

2. Verfahren nach Anspruch 1, dadurch gekennzeichnet, daß die Drehvorrichtung (28) das Behandlungsgut (36) in eine Drehung, die zu der Zugwalze (12) gegenläufig ist, gesetzt wird.

3. Verfahren nach Anspruch 1 oder 2, dadurch gekennzeichnet, daß die Drehvorrichtung (28) an der Schneideeinheit (22) angrenzend positioniert wird und in der Drehrichtung der Zugwalze (12) angetrieben wird.

4. Verfahren nach einem der vorhergehenden Ansprüche, dadurch gekennzeichnet, daß die Drehvorrichtung (28) wechselseitig von einer Arbeitsposition (5), bei der eine vordere Kante (33) der Drehvorrichtung (28) zum Angreifen und Drehen des Behandlungsgutes (36) vorgesehen ist, in eine Abtransportposition (6) bei der die Drehvorrichtung (28) über oder hinter das Behandlungsgut (4) vorgesehen ist, bewegt wird.

5. Verfahren nach einem der vorhergehenden Ansprüche, dadurch gekennzeichnet, daß für das Abtransportieren des Behandlungsgutes (36) die Drehvorrichtung (28) mit dem Behandlungsgut (36) der Transportrichtung (4) entgegen bewegt wird, die Drehvorrichtung (28) abgebremst wird und in eine Abtransportposition (6) geführt wird, bei der die Drehrichtung der Drehvorrichtung (28) umgekehrt wird und das Behandlungsgut (36) durch Zusammenwirken von Drehvorrichtung (28), Zuführeinrichtung (14) und Zugwalze (12) in Transportrichtung (4) über der Schneideeinheit (22) hinaus, herausgeführt wird.

6. Verfahren nach einem der vorhergehenden Ansprüche, dadurch gekennzeichnet, daß für das Abtransportieren des Behandlungsgutes (36) die Zufuhreinrichtung (14) soweit entgegen die Transportrichtung (4) bewegt wird, daß das Behandlungsgut (36) zwischen Schneideeinheit (22) und Zufuhreinrichtung (14) nach unten fallen kann und die Zufuhreinrichtung (14) danach wieder in ihre Ausgangsposition zurückkehrt.

7. Verfahren nach einem der vorhergehenden Ansprüche, dadurch gekennzeichnet, daß das Behandlungsgut (36) zum Abtransport durch einen Arm aus seiner Position an der Schneideeinheit (22) herausgeführt wird.

8. Verfahren nach einem der vorhergehenden Ansprüche, dadurch gekennzeichnet, daß ein auf der Zuführeinrichtung (14) aufliegendes Behandlungsgut (36) durch eine Tasteinrichtung (20) erkannt wird und in Abhängigkeit dazu, die Drehvorrichtung (28) in eine Arbeitsposition (5) übergeführt wird und gleichlaufend zu der Zugwalze (12) angetrieben wird.

9. Verfahren nach einem der vorhergehenden Ansprüche, dadurch gekennzeichnet, daß eine mit dem Behandlungsgut (36) verbundene Eingabe von Daten erfolgt und die Arbeitsposition (5) als Funktion der Daten angepaßt wird.

10. Vorrichtung zum Enthäuten und Abschwarten von Behandlungsgut, wie Fleisch-, Fischstücke oder dgl., zur Durchführung des Verfahrens nach einem der vorhergehenden Ansprüche, mit einem Grundgestell (26), einer Schneideinheit (22) und einer Zugwalze (12), die an dem Grundgestell (26) vorgesehen sind, einer Zuführeinrichtung (14), die das Behandlungsgut (36) der Zugwalze (12) zuführt und einer Haltevorrichtung (30), die an dem Grundgestell (26) bewegbar vorgesehen ist, dadurch gekennzeichnet, daß eine mit der Zugwalze (12) zusammenwirkende, an der Haltevorrichtung (30) angeordnete Drehvorrichtung (28) vorgesehen ist zum Drehen des Behandlungsgutes (36) um seine eigene Achse (8), die im wesentlichen parallel zur Zugwalze (12) und zur Schneideinheit (22) verläuft.

11. Vorrichtung nach Anspruch 6 und 10, dadurch gekennzeichnet, daß die Zufuhreinrichtung (14) zum Bearbeiten des Behandlungsgutes (36) in Transportrichtung gesehen direkt hinter der Schneideeinheit (22) angeordnet ist, und daß die Zufuhreinrichtung (14) zum Abtransportieren des Behandlungsgutes (36) so positioniert ist, daß zwischen Schneideeinheit (22) und Zufuhreinrichtung (14) ein Abstand vorhanden ist, der größer als die Ausmaße des Behandlungsgutes (36) ist.

12. Vorrichtung nach Anspruch 7 und 10, dadurch gekennzeichnet, daß ein dem Abtransport dienender Arm über der oder in Transportrichtung (4) gesehen hinter der Drehvorrichtung (28) angebracht ist, der das Behandlungsgut seitlich aus seiner Position an der Schneideeinheit herausführt.

13. Vorrichtung nach Anspruch 10, dadurch gekennzeichnet, daß die Drehvorrichtung (28) in eine Arbeitsposition (5), bei der die Drehvorrichtung (28) an die Schneideinheit (22) angrenzt und vorzugsweise hinter der Schneideinheit (22) in Transportrichtung gesehen, vorgesehen ist, und in eine Abtransportposition (6), bei der die Drehvorrichtung (28) oberhalb oder hinter dem Behandlungsgut (36) in Transportrichtung (4) gesehen angeordnet ist, positionierbar ist.

14. Vorrichtung nach Anspruch 10 oder 13 dadurch gekennzeichnet, daß die Drehvorrichtung (28) als Druckwalze ausgebildet ist.

15. Vorrichtung nach Anspruch 10, 13, 14, dadurch gekennzeichnet, daß die Drehvorrichtung (28) achsparallele, im wesentlichen linienförmige, über die Umfangsfläche gleichmäßig verteilte und gegenüber der Umfangsfläche hervorragende Angriffskanten (33) aufweist, die vorzugsweise durch eine Vielzahl von Schaufelartigen Rädern (29) gebildet ist.

16. Vorrichtung nach Anspruch 15, dadurch gekennzeichnet, daß die Räder (29) im wesentlichen radial nach außen verlaufende Schaufeln aufweisen, die vorzugsweise an ihren äußeren Enden abgewinkelte Finger (32) aufweisen.

17. Vorrichtung nach Anspruch 15 oder 16, dadurch gekennzeichnet, daß wenigstens eines der Schaufelräder (29), das vorzugsweise in der Mitte der Drehvorrichtung (28) vorgesehen ist, gegenüber den übrigen Schaufelrädern (29) versetzt angeordnet ist.

18. Vorrichtung nach Anspruch 10 , 13 bis 17, dadurch gekennzeichnet, daß die Drehvorrichtung (28) in der Arbeitsposition (5) eine der Zugwalze (12) entsprechende Drehrichtung und in der Abtransportposition (6) eine der Zugwalze (12) entgegengesetzte Drehrichtung aufweist.

19. Vorrichtung nach Anspruch 10 oder 13, dadurch gekennzeichnet, daß die die Drehvorrichtung (28) aufnehmende Haltevorrichtung (30) unabhängig des Grundgestells (26) der Schneideinheit (22) zuordenbar ist.

20. Vorrichtung nach Anspruch 19, dadurch gekennzeichnet, daß die Drehvorrichtung (28) als Lineareinheit ausgebildet ist.

21. Vorrichtung nach Anspruch 20, dadurch gekennzeichnet, daß wenigstens eine Lineareinheit (28) mit wenigstens einer eine vordere Angriffskante (33) aufweisenden Angriffseinrichtung ausgebildet ist.

22. Vorrichtung nach Anspruch 20 oder 21, dadurch gekennzeichnet, daß die Lineareinheit (28) in der Arbeits- und Abtransportposition (5,6) an der Haltevorrichtung (30) bewegbar, insbesondere schwenkbar angeordnet ist.

23. Vorrichtung nach Anspruch 20 bis 22, dadurch gekennzeichnet, daß wenigstens eine Lineareinheit (28) mit ihrer vorderen Angriffskante (33) an dem Behandlungsgut (36) angreifbar angeordnet sind, die vorzugsweise einen hakenförmigen Bahnverlauf zur Drehung des Behandlungsgutes (36) um die Achse (8) aufweist.

24. Vorrichtung nach Anspruch 20 bis 23, dadurch gekennzeichnet, daß die Angriffseinrichtung an der Lineareinheit (28) austauschbar angeordnet ist.

25. Vorrichtung nach Anspruch 20 bis 24, dadurch gekennzeichnet, daß die Angriffseinrichtung kammartig ausgebildet ist und an ihren freien Enden der Zinken mit der vorderen Angriffskante (33) versehen sind und daß wenigstens zwei ineinandergreifende kammartige Angriffseinrichtungen von Lineareinheiten (28) gegenläufig zueinander bewegbar sind.

26. Vorrichtung nach Anspruch 10, 13 bis 25, dadurch gekennzeichnet, daß die die Drehvorrichtung (28) aufnehmende Haltevorrichtung (30) über wenigstens ein Paar Schwingen (42) und wenigstens einer Zylindereinheit (34) in eine der Positionen (5,6) anordenbar ist.

27. Vorrichtung nach Anspruch 10, 13 bis 26, dadurch gekennzeichnet, daß eine Abtransporteinrichtung (16) hinter der Schneideinheit (22) in Transportrichtung (4) gesehen, zum Herausführen des Behandlungsgutes (36) vorgesehen ist.

28. Vorrichtung nach Anspruch 10, 13 bis 27, dadurch gekennzeichnet, daß die Schneideinheit (22) als Schneidklinge ausgebildet ist.

29. Vorrichtung nach Anspruch 10, 13 bis 28, dadurch gekennzeichnet, daß eine Tasteinrichtung (20) zur Überwachung von auf der Zuführeinrichtung (14) aufgebrachten Behandlungsgut (36) an der Zuführeinrichtung (14) vorgesehen ist.

30. Vorrichtung nach Anspruch 10, 13 bis 29 dadurch gekennzeichnet, daß an dem Grundgestell (26) eine Steuereinheit (100) vorgesehen ist.

31. Vorrichtung nach Anspruch 30, dadurch gekennzeichnet, daß die Steuereinheit (100) zur Steuerung der Vorrichtung an unterschiedliche Behandlungsgüter (36) anpassbar ist.

32. Vorrichtung nach Anspruch 30 oder 31, dadurch gekennzeichnet, daß die Drehgeschwindigkeit der Drehvorrichtung (28) auf die unterschiedlichen Behandlungsgüter (38) anpassbar und mit der Steuereinheit (100) regelbar ist.

33. Vorrichtung nach Anspruch 30 bis 32, dadurch gekennzeichnet, daß die Steuereinheit (100) auf die Zeitdauer des an der Schneideinheit (22) rotierenden Behandlungsgutes (36) einstellbar ist.

34. Vorrichtung nach Anspruch 30 bis 33, dadurch gekennzeichnet, daß die Steuereinheit (100) auf die Geschwindigkeit zur Bewegung der Haltevorrichtung (30) zwischen der Arbeitsposition (5) und Transportposition (6) einstellbar ist.

35. Vorrichtung nach Anspruch 30 bis 34, dadurch gekennzeichnet, daß die Steuereinheit (100) ein Benutzerbedienfeld (40) und eine zentrale Recheneinheit (110), die mit dem Benutzerbedienfeld (40) elektrisch verbunden und zur Aufnahme und Verarbeitung von Benutzereingaben vorgesehen ist.

## Claims

1. Process for skin and rind removal from an article to be treated, in particular pieces of meat, fish or similar products, within a skin removal machine (1), by this process, the article to be heated (36) is brought up to a feeding device (14) and fed in the direction of transportation (4) onto a pulling roller (12), and by this process, the pulling roller (12) picks up the article to be heated (36) and transports it to a cutting unit (22),
characterised in that the article to be heated (36) is rotated at the cutting unit (22) on its own axis (8), which is essentially parallel to the pulling roller, (12) with at least one rotating device (28) to remove skin.

2. Process according to claim 1, characterised in that the article to be heated (36) is set in rotation by the rotating device, contrary to the rotation of the pulling roller (12)

3. Process according to claims 1 or 2, characterised in that the rotating device (28) is positioned adjacent to the cutting unit (22) and is positioned in the direction of the rotation of the pulling roller (12).

4. Process according to any one of the aforementioned claims, characterised in that the rotating device (28) is interchangeably moved from a working position (5), in which the purpose of the front edge (33) of the rotating device (28) is to pick up and rotate the article to be heated (36), to a transportation position (6), wherby the rotating device (28) is positioned above or behind the article to be treated(4).

5. Process according to any one of the aforementioned claims, characterised in that the rotating device (28), for transportation of the article to be heated (36), is moved in the opposite direction to the transportation direction (4) and the rotating device (28) is slowed down and is led to a transportation position (6), whereby the rotation direction of the rotating device (28) is reversed and the article to be heated (36) is led out in the transportation direction (4) beyond the cutting unit (22), by co-operating with the rotating device (28), the feeding device (14) and the pulling roller (12).

6. Process according to any one of the aforementioned claims, characterised in that the feeding device (14) for the transportation of the article to be treated (36) is moved contrary to the transportation direction (4), in so far that the article to be treated (36) can drop down between the cutting unit (22) and the feeding device (14) and thereafter returns to the starting position.

7. Process according to any one of the aforementioned claims, characterised in that the article to be treated (36) is led away for transportation from its position at the cutting unit (22) by an arm.

8. Process according to any one of the aforementioned claims, characterised in that an article to be treated (36), which is on the feeding device (14), is recognised by an touch sensitised device (20) and in dependence thereof, the rotating device (28) is transferred to a working position and is moved to the pulling roller (12) at the same time.

9. Process according to any one of the aforementioned claims, characterised in that an input of data takes place in dependence of the article to be treated (36) and that the working position (5) is adapted to the function of the data.

10. Device to remove skin and rind from an article to be treated, such as pieces of meat, fish or similar products, for the implementation of the process according to any one of the aforementioned claims, with a basic framework (26), a cutting unit (22) and a pulling roller (12), which is to be positioned on the basic framework (26) and a feeding device (14), which feeds the article to be treated (36) to the pulling roller (12) and to a holding device (30), which is positioned on the basic framework and can be moved (26), characterised in that a rotating device (28) which is positioned on the holding device (30) and which co-operates with the pulling roller (12), rotates the article to be treated (36) along its own axis (8), which runs essentially parallel to the pulling roller (12) and to the cutting unit (22).

11. Device according to claims 6 and 10, characterised in that the feeding device (14) for the handling of the article to be treated (36) - in the transportation direction - is positioned directly behind the cutting unit (22) and that the feeding device (14) is positioned for the transportation of the article to be treated (36) in such a way that there is a gap between the cutting unit (22) and the feeding device (14) is bigger than the dimensions of the article to be treated (36).

12. Device according to claims 7 and 10, characterised in that an arm for the transportation is positioned above the rotating device (28) or, as seen in direction of the transportation (4), behind the rotating device (28) and the arm leads the article to be treated out of its position at the side on the cutting unit.

13. Device according to claim 10, characterised in that the rotating device (28) is placed in a working position (5), whereby the rotating device (28) is adjacent to the cutting unit (22) and in preference, is positioned behind the cutting unit (22) when looking in the direction of the transportation, and the rotating device (28) is placed in a transportation position (6), whereby the rotating device (28) can be positioned above or behind the article to be treated (36) when looking in the direction of the transportation.

14. Device according to claims 10 and 13, characterised in that a pressing roller is used as the rotating device (28).

15. Device according to claims 10, 13,14, characterised in that the rotating device (28) has catching edges, (33) which are parallel to the axis, and constantly distributed, essentially in the form of a line, and projected over the surrounding surface and the catching edges preferably form a wheel (29) with many paddles.

16. Device according to claim 15, characterised in that the wheels (29) have paddles which are in essence leading out radially, and the paddles preferably have bended fingers (32) at their external tips.

17. Device according to claims 15 or 16, charaterised in that at least one of the paddle wheels (29), which is preferably positioned in the middle of the rotating device (28), is staggered in comparison to the other paddle wheels (29).

18. Device according to claims 10, 13 to 17, characterised in that, the rotating device (28) has a rotation direction corresponding to the rotation direction of the pulling roller (12) while in the working position (5) and has a rotation direction contrary to the rotation direction of the pulling roller (12) while in the transporation position (6).

19. Device according to claims 10 or 13, characterised in tha the holding device (30) which picks up the rotating device (28) is attachable to the cutting unit (22), independent from the basic framework (26).

20. Device according to claim 19 characterised in that, the a linear unit is used as rotating device (28).

21. Device according to claim 20, characterised in that at least one linear unit (28) is formed as at least one catching device which has a front catching edge (33)

22. Device according to claims 20 or 21, characterised in that the linear unit (28) can be moved, in particular able to swing, within the holding device (30),while in the working and the transportation positions (5,6),

23. Device according to claims 20 to 22, characterised in that at least one linear unit (28) is positioned to be able to catch, with its front catching edge (33) on the article to be treated has preferably a route shaped like a hook to rotate the article to be treated (36) along the axis (8).

24. Device according to claims 20 to 23, characterised in that the catching device is positioned to exchange, on the linear unit (28).

25. Device according to claims 20 to 24, characterised in that the catching device is formed like a comb and that at its free ends, the tooth has a front catching edge (33) and that at least two interlocking comblike catching devices of linear devices (28) are movable contrary to one other.

26. Device according to claims 10, 13 to 25, characterised in that the holding device (30) which picks up the rotating device (28), is able to be placed in one of the positions (5, 6) over at least one pair of wings (42) and at least one cylindric device (34).

27. Device according to claims 10, 13 to 26, characterised in that a transportation device (16) is positioned, when looking in the direction of the transportation, behind the cutting unit (22) to lead out the article to be treated.

28. Device according to claims 10, 13 to 27, characterised in that a cutting blade is used as cutting unit (22).

29. Device according to claims 10, 13 to 28, characterised in that a touch sensitised device (20) is positioned on the feeding device (14) to control the article to be treated (36), which is brought onto the feeding device (14).

30. Device according to claims 10, 13 to 29, characterised in that a controlling unit (100) is positioned on the basic framework (26).

31. Device according to claim 30, characterised in that the controlling unit (100) to control the device can be adapted to different articles to be treated (36).

32. Device according to claims 30 or 31, characterised in that the rotation speed of the rotation device (28) can be adapted to the different articles to be treated (38) and can be controlled with the controlling unit (100).

33. Device according to claims 30 to 32, characterised in that the controlling unit (100) can be adjusted to the length of time in which the article to be treated (36) rotates on the cutting unit (22).

34. Device according to claims 30 to 33, characterised in that the controlling unit (100) can be adjusted to the movement speed of the holding device (30) between the working position (5) and transportion position (6).

35. Device according to claims 30 to 34, characterised in that the controlling unit (100) comprises of a user control panel (40) and a central processing unit (110) which is electrically connected to the user control panel (40) and the purpose of which is to take in and process the input of the user.

## Revendications

1. Procédé pour écorcher une matière à traiter, notamment des morceaux de viande, de poisson ou autres, et pour en dépouiller la couenne dans une machine à écorcher (1), où la matière à traiter (36) est posée sur un dispositif d'alimentation (14) et amenée en direction de transport (4) vers un rouleau de traction (12), et où la matière à traiter (36) est transportée par le rouleau de traction (12) la saisissant vers une unité de tranchage (22),
caractérisé par le fait que pour l'écorchement par l'unité de tranchage (22), la matière à traiter (36) est tournée autour de son axe (8) - sommairement parallèle au rouleau de traction (12) - par au moins un dispositif de rotation (28).

2. Procédé selon la revendication 1, caractérisé par le fait que la matière à traiter (36) est tournée par le dispositif de rotation (28) dans un sens opposé à celui du rouleau de traction (12).

3. Procédé selon la revendication 1 ou 2, caractérisé par le fait que le dispositif de rotation (28) est placé dans une position avoisinante de l'unité de tranchage (22) et qu'il tourne dans le sens de rotation du rouleau de traction (12).

4. Procédé selon une des revendications précédentes, caractérisé par le fait que le dispositif de rotation (28) est déplacé alternativement d'une position de travail (5), où une arête avant (33) du dispositif de rotation (28) est prévue pour saisir et faire tourner la matière à traiter (36), en une position d'évacuation (6), où il est prévu que le dispositif de rotation (28) soit au-dessus ou derrière la matière à traiter (4).

5. Procédé selon une des revendications précédentes, caractérisé par le fait que pour l'évacuation de la matière à traiter (36), le dispositif de rotation (28) est déplacé avec la matière à traiter (36) dans le sens opposé à la direction de transport (4), que le dispositif de rotation (28) est freiné et qu'il est amené en une position d'évacuation (6), où le sens de rotation du dispositif de rotation (28) est inversé et où la matière à traiter (36) est évacuée - en direction de transport (4) - par-dessus l'unité de tranchage (22), grâce à l'effet combiné du dispositif de rotation (28), du dispositif d'alimentation (14) et du rouleau de traction (12).

6. Procédé selon une des revendications précédentes, caractérisé par le fait que pour l'évacuation de la matière à traiter (36), le dispositif d'alimentation (14) est déplacé dans le sens opposé à la direction de transport (4) jusqu'à ce que la matière à traiter (36) puisse tomber vers le bas entre l'unité de tranchage (22) et le dispositif d'alimentation (14), et qu'ensuite le dispositif d'alimentation (14) reprend sa position initiale.

7. Procédé selon une des revendications précédentes, caractérisé par le fait que pour l'évacuation, la matière à traiter (36) est amenée hors de sa position sur l'unité de tranchage (22) par un bras.

8. Procédé selon une des revendications précédentes, caractérisé par le fait qu'une matière à traiter (36) posée sur le dispositif d'alimentation (14) est reconnue par un dispositif palpeur (20), et qu'en fonction de cela, le dispositif de rotation (28) est amené en une position de travail (5) et tourné dans le même sens que le rouleau de traction (12).

9. Procédé selon une des revendications précédentes, caractérisé par le fait qu'une saisie de données concernant la matière à traiter (36) est effectuée et que la position de travail (5) est adaptée en fonction de ces données.

10. Dispositif pour écorcher une matière à traiter, par exemple des morceaux de viande, de poisson ou autres, et pour en dépouiller la couenne, servant à appliquer le procédé conforme à une des revendications précédentes, avec un bâti (26), une unité de tranchage (22) et un rouleau de traction (12) prévus sur le bâti (26), un dispositif d'alimentation (14) amenant la matière à traiter (36) vers le rouleau de traction (12), et un dispositif de support (30) mobile prévu sur le bâti (26), caractérisé par le fait qu'un dispositif de rotation (28) disposé sur le dispositif de support (30) et agissant ensemble avec le rouleau de traction (12) est prévu pour tourner la matière à traiter (36) autour de son axe (8), cet axe étant sommairement parallèle au rouleau de traction (12) et à l'unité de tranchage (22).

11. Dispositif selon les revendications 6 et 10, caractérisé par le fait que pour le traitement de la matière à traiter (36), le dispositif d'alimentation (14) est disposé - vu dans le sens de la direction de transport - directement derrière l'unité de tranchage (22), et que pour l'évacuation de la matière à traiter (36), le dispositif d'alimentation (14) est positionné de telle manière qu'il y ait entre l'unité de tranchage (22) et le dispositif d'alimentation (14) un écart plus grand que les dimensions de la matière à traiter (36).

12. Dispositif selon les revendications 7 et 10, caractérisé par le fait qu'un bras servant à l'évacuation est placé au-dessus ou - vu dans le sens de la direction de transport (4) - derrière le dispositif de rotation (28), et qu'il déplace latéralement la matière à traiter hors de sa position près de l'unité de tranchage.

13. Dispositif selon la revendication 10, caractérisé par le fait que le dispositif de rotation (28) peut être positionné en une position de travail (5), où le dispositif de rotation (28) est avoisinant de l'unité de tranchage (22) et prévu de préférence - vu dans le sens de la direction de transport - derrière l'unité de tranchage (28), et en une position d'évacuation (6), où le dispositif de rotation (28) est disposé au-dessus ou - vu dans le sens de la direction de transport - derrière la matière à traiter (36).

14. Dispositif selon la revendication 10 ou 13, caractérisé par le fait que le dispositif de rotation (28) est conçu comme rouleau-presseur.

15. Dispositif selon les revendication 10, 13 et 14, caractérisé par le fait que le dispositif de rotation (28) a des arêtes d'attaque (33) parallèles à l'axe, globalement linéaires, reparties de manière homogène sur la circonférence et saillantes par rapport à la circonférence, qui est formée de préférence par une multitude de roues (29) en forme d'aubes.

16. Dispositif selon la revendication 15, caractérisé par le fait que les roues (29) ont des aubes dirigées radialement vers l'extérieur, qui ont de préférence à leurs extrémités extérieures des doigts coudés (32).

17. Dispositif selon la revendication 15 ou 16, caractérisé par le fait qu'au moins une des roues à aubes (29), qui sera de préférence prévue au milieu du dispositif de rotation (28), est décalée par rapport aux autres roues à aubes (29).

18. Dispositif selon les revendications 10 et 13 à 17, caractérisé par le fait que le dispositif de rotation (28) a dans sa position de travail (5) un sens de rotation correspondant à celui du rouleau de traction (12), et dans sa position d'évacuation (6) un sens de rotation opposé à celui du rouleau de traction (12).

19. Dispositif selon la revendication 10 ou 13, caractérisé par le fait que dispositif de support (30) recevant le dispositif de rotation (28) peut être affecté à l'unité de tranchage (22) indépendamment du bâti (26).

20. Dispositif selon la revendication 19, caractérisé par le fait que le dispositif de rotation (28) est conçu comme unité linéaire.

21. Dispositif selon la revendication 20, caractérisé par le fait que soit conçue au moins une unité linéaire (28) avec au moins un dispositif d'attaque ayant une arête d'attaque avant (33).

22. Dispositif selon la revendication 20 ou 21, caractérisé par le fait qu'en position de travail et d'évacuation (5, 6), l'unité linéaire (28) est disposée de manière mobile, notamment pivotable, sur le dispositif de support (30).

23. Dispositif selon les revendications 20 à 22, caractérisé par le fait qu'au moins une unité linéaire (28) est disposée avec son arête d'attaque avant (33) de manière à pouvoir attaquer la matière à traiter (36), et qu'elle a un parcours de préférence en forme de crochet pour pouvoir tourner la matière à traiter (36) autour de son axe (8).

24. Dispositif selon les revendications 20 à 23, caractérisé par le fait que le dispositif d'attaque est disposé de manière interchangeable sur l'unité linéaire (28).

25. Dispositif selon les revendications 20 à 24, caractérisé par le fait que le dispositif d'attaque a la forme d'un peigne, dont les extrémités libres des dents sont pourvues de l'arête d'attaque avant (33) et qu'au moins deux dispositifs d'attaque d'unités linéaires (28), en forme de peigne entrecroisés, ont des mouvements de sens opposé.

26. Dispositif selon les revendications 10 et 13 à 25, caractérisé par le fait que le dispositif de support (30) recevant le dispositif de rotation (28) peut être disposé, moyennant au moins une paire d'ailes (42) et au moins une unité cylindrique (34), dans une des positions (5, 6).

27. Dispositif selon les revendications 10 et 13 à 26, caractérisé par le fait qu'un dispositif d'évacuation (16) est prévu derrière l'unité de tranchage (22) - vu dans le sens de la direction de transport - pour évacuer la matière à traiter (36).

28. Dispositif selon les revendications 10 et 13 à 27, caractérisé par le fait que l'unité de tranchage (22) est conçue comme lame tranchante.

29. Dispositif selon les revendications 10 et 13 à 28, caractérisé par le fait qu'un dispositif palpeur (20) est prévu sur le dispositif d'alimentation (14) pour surveiller la matière à traiter (36) posée sur le dispositif d'alimentation (14).

30. Dispositif selon les revendications 10 et 13 à 29, caractérisé par le fait qu'une unité de commande (100) est prévue sur le bâti (26).

31. Dispositif selon la revendication 30, caractérisé par le fait que l'unité de commande (100) servant à commander le dispositif est adaptable à différentes matières à traiter (36).

32. Dispositif selon la revendication 30 ou 31, caractérisé par le fait que la vitesse de rotation du dispositif de rotation (28) est adaptable aux différentes matières à traiter (38) et réglable avec l'unité de commande (100).

33. Dispositif selon les revendications 30 à 32, caractérisé par le fait que l'unité de commande (100) est réglable sur la durée de temps que la matière à traiter (36) tourne sur l'unité de tranchage (22).

34. Dispositif selon les revendications 30 à 33, caractérisé par le fait que l'unité de commande (100) est réglable sur la vitesse de déplacement du dispositif de support (30) entre la position de travail (5) et la position d'évacuation (6).

35. Dispositif selon les revendications 30 à 34, caractérisé par le fait que l'unité de commande (100) dispose d'un tableau de commande de l'utilisateur (40) et d'un ordinateur central (110) relié électriquement au tableau de commande de l'utilisateur (40) et prévu pour saisir et traiter les données entrées par l'utilisateur.
